(19)

Europäisches Patentamt
European Patent Office
Office européen des brevets

(11) **EP 3 306 521 B1**

(12) **EUROPEAN PATENT SPECIFICATION**

(45) Date of publication and mention of the grant of the patent:
**08.12.2021 Bulletin 2021/49**

(51) Int Cl.:
***G06K 9/00*** *(2006.01)*

(21) Application number: **16192827.0**

(22) Date of filing: **07.10.2016**

(54) **STEREO VISION SYSTEM AND METHOD FOR A MOTOR VEHICLE**

STEREOSICHTSYSTEM UND -VERFAHREN FÜR EIN KRAFTFAHRZEUG

SYSTÈME DE VISION STÉRÉO ET PROCÉDÉ POUR UN MOTEUR DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.04.2018 Bulletin 2018/15**

(73) Proprietor: **Veoneer Sweden AB**
**447 83 Vårgårda (SE)**

(72) Inventor: **Medley, Fredrik**
**58247 Linköping (SE)**

(74) Representative: **Müller Verweyen**
**Patentanwälte**
**Friedensallee 290**
**22763 Hamburg (DE)**

(56) References cited:
**US-A1- 2003 205 661     US-A1- 2014 321 701**
**US-A1- 2015 156 471**

- **Alonzo Kelly ET AL: "Stereo Vision Enhancements for Low-Cost Outdoor Autonomous Vehicles", , 1 May 1998 (1998-05-01), XP055352731, Retrieved from the Internet: URL:http://citeseerx.ist.psu.edu/viewdoc/d ownload?doi=10.1.1.73.1525&rep=rep1&type=p df [retrieved on 2017-03-08]**
- **LIANG WANG ET AL: "High-Quality Real-Time Stereo Using Adaptive Cost Aggregation and Dynamic Programming", 3D DATA PROCESSING, VISUALIZATION, AND TRANSMISSION, THIRD INTERNATION AL SYMPOSIUM ON, IEEE, PI, 1 June 2006 (2006-06-01), pages 798-805, XP031079018, ISBN: 978-0-7695-2825-0**
- **POLLARD S B: "PMF: A STEREO CORRESPONDENCE ALGORITHM USING A DISPARITY GRADIENT LIMIT", PERCEPTION, PION LTD., LONDON, GB, vol. 14, no. 4, 1 January 1985 (1985-01-01), pages 449-470, XP008076299, ISSN: 0301-0066, DOI: 10.1068/P140449**
- **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a stereo vision system for a motor vehicle, comprising an imaging apparatus adapted to capture images from the surrounding of the motor vehicle and a processing device adapted to perform image processing on images capture by said imaging apparatus and to control a driver assistance device depending on the result of said image processing.

In cars, so-called stray light swords are generated by wind shield wiper wear and precipitation smear-out by wipers. The source of these light swords is scratches in the windshield which come from dust, dirt and stones gathered on the wiper. The light swords come from scatter effects on these scratches. Camera systems in cars should handle light swords and other artefacts that occur in the image to avoid false braking and other erroneous behavior.

A. Kelly et al., "Stereo Vision Enhancement for Low-Cost Outdoor Autonomous Vehicles", 1998 IEEE Conference on Robotics and Automation, May 1998, discloses a vision system adapted to compensate for artefacts originating from uneven outdoor terrain in the environment of the motor vehicle.

US 2014/0321701 A1 discloses a vision system according to the preamble of claim 1, using a Refractive-Diffractive Wiper Streak Model for detecting artificial streaks perpendicular and parallel to the wiper streaks.

L. Wang et al., "High-quality Real-time Stereo using Adaptive Cost Aggregation and Dynamic Programming", Proc. of the Third In. Symp. on 3D Data Processing, Visualization, and Transmission, IEEE 2006, and S. B. Polard et al., "PMF: A stereo correspondence algorithm using a disparity gradient limit", Perception, 1985, vol. 14, p. 449-470, disclose approaches of variational stereo.

US 2015/0156471 A1 discloses a device for processing stereoscopic data adapted to detect obstacles in the vehicle environment based on a classification of object structures in a disparity image using vertical disparity gradient.

The problem underlying the present invention is to provide a stereo vision system and method where the influence of light swords and other artefacts on the object detection is reduced.

The invention solves this problem with the features of the independent claims. The invention has found out that artefacts like light swords have a characteristic disparity gradient in a vertical direction. Therefore, artefacts in the captured images can easily and reliably be determined and/or removed, by calculating and analyzing the vertical disparity gradient of the captured images.

In the image, pixel column and pixel row are denoted as u and v, and the disparity is denoted d. Then, the following equation holds for the set value k_ls for the vertical disparity gradient of a light sword:

$$\text{k\_ls} = (\delta \Delta u / \delta v)_{ls} = (\delta d / \delta v)_{ls} = (b \cdot fx) / (y \cdot fy)$$

where fx and fy are the horizontal and vertical focal lengths of the imaging apparatus 11 in pixels. Using the approximation fx=fy, this can be further simplified to

$$\text{k\_ls} = b/y$$

The calculated vertical disparity gradient of the captured images is compared against a set value of an artefact, for example of a light sword. Herein, the set value of a light sword can for example be given by the above formula k_ls = b/y, where b is the stereo baseline of the imaging apparatus and y is the vertical windscreen height.

Other ways of determining and/or eliminating light swords or other artefacts are possible. For example, the calculated vertical disparity gradient may be compared against a threshold value k_thr. In particular, a structure in a captured image may be regarded an artefact if the calculated vertical disparity gradient is significantly larger than the threshold value. Also, the vertical disparity gradient k may be compared against a value range characteristic of a particular artefact. For example, a structure in a captured image may be regarded an artefact if the vertical disparity gradient k of the structure falls within the above mentioned value range.

It can be advantageous to consider a set value of the vertical disparity gradient k_r of the road in the artefact determination or removal. Herein, the vertical disparity gradient k_r of the road can for example be given by the formula k_r = b/H, where b is the stereo baseline of the imaging apparatus and H is the height of the imaging apparatus above ground. Furthermore, a structure in a captured image may be regarded an artefact if the vertical disparity gradient of the structure is significantly larger than zero. The reason for this is that vertical objects of interest in many driver assistance applications, like pedestrians, other vehicles, bicyclists etc. having a zero or near zero vertical disparity gradient.

The invention is implemented by providing a filter adapted to discard or filter out structures having a vertical disparity gradient above a pre-determined threshold and/or within a predetermined value range. Alternatively or additionally, only structures having a vertical disparity gradient around zero may be kept.

In the following the invention shall be illustrated on the basis of preferred embodiments with reference to the accompanying drawings, wherein:

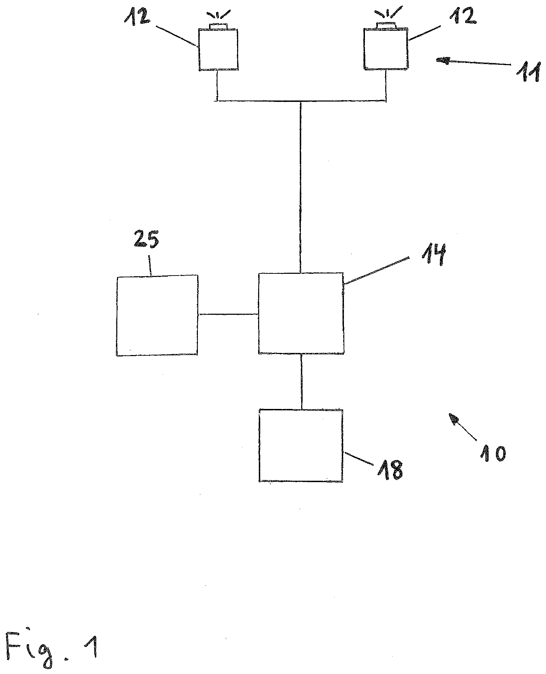

Fig. 1    shows a schematic view of a vision system according to the invention;
Fig. 2    shows left and right raw images captured by the imaging apparatus;
Fig. 3    shows a calculated disparity image with light swords; and
Fig. 4    shows a schematic windscreen layout.

The vision system 10 is mounted in a motor vehicle and comprises an imaging apparatus 11 for capturing images of a region surrounding the motor vehicle, for example a region in front of the motor vehicle. Preferably the imaging apparatus 11 comprises a plurality of optical imaging devices 12, in particular cameras, thus forming a stereo imaging apparatus 11, preferably operating in the visible and/or infrared wavelength range, where infrared covers near IR with wavelengths below 5 microns and/or far IR with wavelengths beyond 5 microns.

The imaging apparatus 11 is coupled to a data processing device 14 adapted to process the image data received from the imaging apparatus 11. The data processing device 14 is preferably a digital device which is programmed or programmable and preferably comprises a microprocessor, microcontroller a digital signal processor (DSP), and/or a microprocessor part in a System-On-Chip (SoC) device, and preferably has access to, or comprises, a data memory 25. The data processing device 14 may comprise a dedicated hardware device, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of driver assistance device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one driver assistance device 18 depending on an estimation performed with respect to a tracked object, for example on an estimated collision probability. The driver assistance device 18 may in particular comprise a display device to display information relating to a detected object. However, the invention is not limited to a display device. The driver assistance device 18 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as braking or steering control devices.

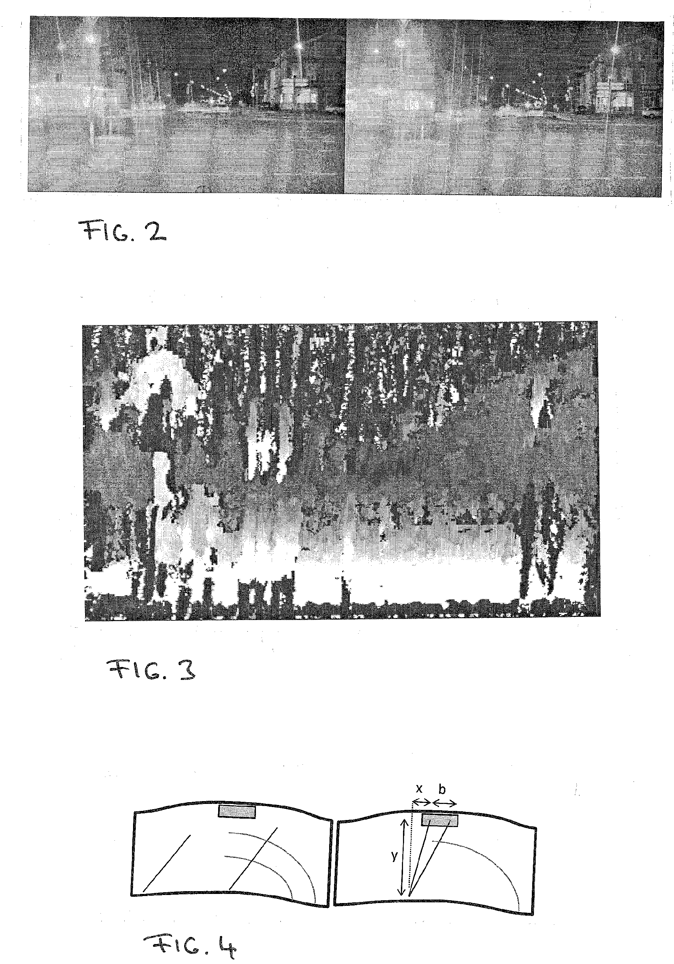

Figure 2 shows left and right raw images captured by the stereo imaging apparatus 11 exhibiting strong artefacts known as light swords or stray light swords. These are generated by wind shield wiper wear and precipitation smearout by wipers.

As described in the foregoing, the processing device 14 calculates a disparity image from the left and right images shown in Figure 2, which disparity image is shown in Figure 3. Using the disparity image, objects in the environment of the motor vehicle, like pedestrians, other vehicles, bicyclists, large animals etc. can be detected. In order to improve the accuracy of the object detection, it is beneficial to remove or discard artefacts like light swords from the disparity image. From the disparity image shown in Figure 3 it is evident that the light swords seem to stand out and are located closer to the imaging apparatus 11 than the ground.

The invention in particular handles light swords due to the pattern of the windscreen wiper motion, for example wear or precipitation smear. These light swords come from scatter effects that are perpendicular to the motion curve of the wiper, see Figure 4, providing a starting point for calculating on how the disparity behaves in the light swords. In the stereo images, a light sword will have the angle x/y and (x+b)/y, respectively. The angle difference will be b/y where b is the baseline of the stereo imaging apparatus 11, i.e. the distance between the stereo imaging devices 12.

In the image, pixel column and pixel row are denoted as u and v, and the disparity is denoted d. Then, the following equation holds for the set value $k\_ls$ for the vertical disparity gradient of a light sword:

$$k\_ls \; = \; (\delta\Delta u/\delta v)_{ls} \; = \; (\delta d/\delta v)_{ls} \; = \; (b{\cdot}fx)/(y{\cdot}fy)$$

where fx and fy are the horizontal and vertical focal lengths of the imaging apparatus 11 in pixels. Using the approximation fx=fy, this can be further simplified to

$$\mathtt{k\_ls\ =\ b/y}$$

Taking as an example a windscreen height of y = 0.7 m and a baseline of b = 16 cm, the set value k_ls for the vertical disparity gradient of a light sword is 0.23 pixels/row.

On the other hand, vertical objects with k_object = $(\delta d/\delta v)_{obj}$ = 0 or essentially vertical objects with k_object close to zero, like other vehicles, pedestrians, bicyclists etc., are of special interest in driver assistance applications.

It follows from the above that artefacts like light swords, having a vertical disparity gradient significantly different from zero, can be easily determined and/or removed from the captured images by calculating and analyzing the (average) vertical disparity gradient k of object candidates. This can be done in different manners. For example, the vertical disparity gradient k can be calculated for each pixel of the image, leading to a vertical disparity gradient map. Then object candidates are be detected, and an average vertical disparity gradient of each object candidate can be calculated from the vertical disparity gradient map. In another embodiment, object candidates are detected, and an average vertical disparity gradient of each detected object candidate is calculated, without need to calculate a complete vertical disparity gradient map. Other ways of calculating an average vertical disparity gradient of each object candidate are possible.

In one embodiment, a filter may be applied to all object candidates filtering out such object candidates having an average vertical disparity gradient k in the range between k1 and k2, which are considered to be light swords. In the above example, where k_ls = 0.23 pixels/row, an object candidate having an average vertical disparity gradient k in the range between 0.20 and 0.26 pixels/row may be considered a light sword and therefore be discarded from further processing. Of course, other ranges are possible, and also other objects than light swords, having characteristic k values can be filtered out in a similar manner.

In another embodiment, a filter may be applied to all object candidates filtering out such object candidates having an average vertical disparity gradient k exceeding a pre-defined threshold value k_thr. In the above example, where k_ls = 0.23 pixels/row, an object candidate having an average vertical disparity gradient k equal to or above 0.20 pixels/row may be discarded from further processing.

It can be useful to consider the vertical disparity gradient k_r of the road on which the vehicle moves. The road is usually modelled as flat. Given the camera height H above the ground and a pixel row v, vanishing point row vv and the approximation that the camera looks forward, the world distance to a pixel on the road is

$$\mathtt{dist\ =\ H \cdot fy\,(v-vv)}$$

or, as a disparity value,

$$\mathtt{d\ =\ fx \cdot b \cdot (v-vv)\,/\,(H \cdot fy)}$$

From this it follows that

$$\mathtt{k\_r\ =\ (\delta d/\delta v)_r\ =\ (b \cdot fx)\,/\,(H \cdot fy)}$$

Using again the approximation fx=fy, this can be further simplified to

$$\mathtt{k\_r\ =\ b/H}$$

Taking as an example a camera height above ground of H = 1.2 m and a baseline of b = 16 cm, the set value k_r for the vertical disparity gradient of a light sword is 0.13 pixels/row, i.e., somewhat smaller than k_ls.

It is obvious that an image processing filter that filters out image structures having k_obj, k_r and k_ls, respectively, can distinguish between these groups of structures. Especially a filter adapted to keep only structures having k_obj by discarding structures having k >= k_r will also easily remove structure with k_ls.

**EP 3 306 521 B1**

**Claims**

1.  A vision system (10) for a motor vehicle, comprising a stereo imaging apparatus (11) adapted to capture images from the surrounding of the motor vehicle and a processing device (14) adapted to perform image processing on images captured by said imaging apparatus (11) and to control a driver assistance device (18) depending on the result of said image processing,

    wherein said processing device (14) is adapted to identify object candidates in said images,
    wherein said processing device (14) is further adapted to determine artefacts in the form of light swords in said images,
    wherein said light sword artefacts come from scatter effects on scratches in a windshield of the motor vehicle, which scatter effects are perpendicular to the motion curve of a wiper of the motor vehicle,
    **characterized in that** said processing device (14) is adapted to calculate a disparity gradient k in a vertical direction for at least part of captured images, and to determine and remove said light sword artefacts in said images on the basis of said vertical disparity gradient k,
    wherein for each said object candidate an average vertical disparity gradient is determined based on said vertical disparity gradient k,
    wherein said processing device (14) comprises a filter adapted to filter out object candidates, which are considered to be light swords, having an average vertical disparity gradient within a predetermined value range around a set value k_ls or to keep only object candidates having the average vertical disparity gradient around zero,
    wherein said set value k_ls corresponds to the vertical disparity gradient of a light sword artefact and is determined by k_ls = b/y, where b is the stereo baseline of the imaging apparatus (11) and y is the vertical windscreen height.

2.  The vision system as claimed in claim 1, **characterized in that** said vertical disparity gradient is compared against a threshold value k_thr.

3.  The vision system as claimed in claim 2, **characterized in that** a structure in a captured image is regarded a light sword artefact if the absolute value of the vertical disparity gradient k of said structure is larger than said threshold value k_thr.

4.  The vision system as claimed in any one of the preceding claims, **characterized in that** a set value k_r of the vertical disparity gradient of the road is considered in said light sword artefact determination or removal by discarding structures having a vertical disparity gradient k >= k_r.

5.  The vision system as claimed in claim 4, **characterized in that** the set value of the vertical disparity gradient k_r of the road is k_r = b/H, where b is the stereo baseline of the imaging apparatus and H is the height of the imaging apparatus above ground.

6.  The vision system as claimed in any one of the preceding claims, **characterized in that** a structure in a captured image is regarded a light sword artefact if the absolute value of the vertical disparity gradient k of said structure is larger than zero.

7.  A stereo vision method for a motor vehicle, comprising capturing images from the surrounding of the motor vehicle, performing image processing on captured images and controlling a driver assistance device (18) depending on the result of said image processing, identifying object candidates in said images and determining artefacts in the form of light swords in said images, wherein said light sword artefacts come from scatter effects on scratches in a windshield of the motor vehicle, which scatter effects are perpendicular to the motion curve of a wiper of the motor vehicle, **characterized by** calculating a disparity gradient k in a vertical direction for at least a part of captured images, and determining and removing said light sword artefacts in said images on the basis of said vertical disparity gradient k, determining for each said object candidate an average vertical disparity gradient based on said vertical disparity gradient k, and filtering out object candidates, which are considered to be light swords, having an average vertical disparity gradient within a predetermined value range around a set value k_ls or keeping only object candidates having the average vertical disparity gradient around zero, wherein the set value k_ls corresponds to the vertical disparity gradient of a light sword artefact and is determined by k_ls = b/y, where b is the stereo baseline of the imaging apparatus (11) and y is the vertical windscreen height.

## EP 3 306 521 B1

**Patentansprüche**

1. Ein Sichtsystem für ein Kraftfahrzeug, umfassend eine Stereo-Bildaufnahmevorrichtung (11), die dazu eingerichtet ist, Bilder aus der Umgebung des Kraftfahrzeugs aufzunehmen, und eine Verarbeitungsvorrichtung (14), die dazu eingerichtet ist, eine Bildverarbeitung an den von der Bildaufnahmevorrichtung (11) aufgenommenen Bildern durchzuführen und eine Fahrerassistenzvorrichtung (18) in Abhängigkeit von dem Ergebnis der Bildverarbeitung zu steuern,

   wobei die Verarbeitungsvorrichtung (14) dazu eingerichtet ist, Objektkandidaten in den Bildern zu identifizieren, wobei die Verarbeitungseinrichtung (14) dazu eingerichtet ist, Artefakte in Form von Lichtschwertern in den Bildern zu bestimmen,
   wobei die Lichtschwert-Artefakte von Streueffekten an Kratzern in einer Windschutzscheibe des Kraftfahrzeugs stammen, wobei die Streueffekte senkrecht zur Bewegungskurve eines Wischers des Kraftfahrzeugs verlaufen, **dadurch gekennzeichnet, dass** die Verarbeitungsvorrichtung (14) dazu eingerichtet ist, einen Disparitätsgradienten k in einer vertikalen Richtung für zumindest einen Teil der aufgenommenen Bilder zu berechnen und die Lichtschwert-Artefakte in den Bildern auf der Grundlage des vertikalen Disparitätsgradienten k zu bestimmen und zu entfernen, wobei für jeden der Objektkandidaten ein durchschnittlicher vertikaler Disparitätsgradient auf der Grundlage des vertikalen Disparitätsgradienten k bestimmt wird,
   wobei die Verarbeitungsvorrichtung (14) einen Filter umfasst, der dazu eingerichtet ist, Objektkandidaten, die als Lichtschwerter angesehen werden, mit einem durchschnittlichen vertikalen Disparitätsgradienten innerhalb eines vorbestimmten Wertebereichs um einen eingestellten Wert k_ls herauszufiltern oder nur Objektkandidaten mit einem durchschnittlichen vertikalen Disparitätsgradienten um Null zu behalten,
   wobei der eingestellte Wert k_ls mit dem vertikalen Disparitätsgradienten eines Lichtschwert-Artefakts korrespondiert und durch k_ls = b/y bestimmt wird, wobei b die Stereo-Basislinie der Bildaufnahmevorrichtung (11) und y die vertikale Windschutzscheibenhöhe ist.

2. Das Sichtsystem nach Anspruch 1, **dadurch gekennzeichnet, dass** der vertikale Disparitätsgradient mit einem Schwellenwert k_thr verglichen wird.

3. Das Sichtsystem nach Anspruch 2, **dadurch gekennzeichnet, dass** eine Struktur in einem aufgenommenen Bild als Lichtschwert-Artefakt betrachtet wird, wenn der Absolutwert des vertikalen Disparitätsgradienten k der Struktur größer ist als der Schwellenwert k_thr.

4. Das Sichtsystem nach einem der vorangehenden Ansprüche, **dadurch gekennzeichnet, dass** ein Sollwert k_r des vertikalen Disparitätsgradienten der Straße bei der Bestimmung oder Entfernung von Lichtschwert-Artefakten durch Aussortieren von Strukturen mit einem vertikalen Disparitätsgradienten k >= k_r berücksichtigt wird.

5. Das Sichtsystem nach Anspruch 4, **dadurch gekennzeichnet, dass** der Sollwert des vertikalen Disparitätsgradienten k_r der Straße k_r = b/H ist, wobei b die Stereo-Grundlinie der Bildaufnahmevorrichtung und H die Höhe der Bildaufnahmevorrichtung über dem Boden ist.

6. Das Sichtsystem nach einem der vorangehenden Ansprüche,
   **dadurch gekennzeichnet, dass** eine Struktur in einem aufgenommenen Bild als Lichtschwert-Artefakt betrachtet wird, wenn der Absolutwert des vertikalen Disparitätsgradienten k der Struktur größer als Null ist.

7. Ein Stereosichtverfahren für ein Kraftfahrzeug, umfassend das Aufnehmen von Bildern aus der Umgebung des Kraftfahrzeugs, das Durchführen einer Bildverarbeitung an den aufgenommenen Bildern und das Steuern einer Fahrerassistenzvorrichtung (18) in Abhängigkeit von dem Ergebnis der Bildverarbeitung, das Identifizieren von Objektkandidaten in den Bildern und das Bestimmen von Artefakten in Form von Lichtschwertern in den Bildern, wobei die Lichtschwert-Artefakte von Streueffekten an Kratzern in einer Windschutzscheibe des Kraftfahrzeugs stammen, wobei die Streueffekte senkrecht zur Bewegungskurve eines Scheibenwischers des Kraftfahrzeugs verlaufen,
   **gekennzeichnet durch** Berechnen eines Disparitätsgradienten k in einer vertikalen Richtung für mindestens einen Teil der aufgenommenen Bilder, und Bestimmen und Entfernen der Lichtschwert-Artefakte in den Bildern auf der Basis des vertikalen Disparitätsgradienten k, Bestimmen eines durchschnittlichen vertikalen Disparitätsgradienten für jeden Objektkandidaten auf der Basis des vertikalen Disparitätsgradienten k, und Herausfiltern von Objektkandidaten, die als Lichtschwerter angesehen werden, mit einem durchschnittlichen vertikalen Disparitätsgradienten innerhalb eines vorbestimmten Wertebereichs um einen Sollwert k_ls oder Behalten von nur Objektkandidaten mit

6

dem durchschnittlichen vertikalen Disparitätsgradienten um Null, wobei der Sollwert k_ls mit dem vertikalen Disparitätsgradienten eines Lichtschwert-Artefakts korrespondiert und durch k_ls = b/y bestimmt wird, wobei b die Stereo-Basislinie der Bildaufnahmevorrichtung (11) und y die vertikale Windschutzscheibenhöhe ist.

**Revendications**

1. Un système de vision (10) pour un véhicule à moteur, comprenant un appareil d'imagerie stéréo (11) adapté à capturer des images de l'environnement du véhicule à moteur et un dispositif de traitement (14) adapté à effectuer un traitement d'image sur des images capturées par ledit appareil d'imagerie (11) et à commander un dispositif d'assistance au conducteur (18) en fonction du résultat dudit traitement d'image,

dans lequel ledit dispositif de traitement (14) est adapté à identifier des objets candidats dans lesdites images,
dans lequel ledit dispositif de traitement (14) est en outre adapté à déterminer des artefacts sous la forme d'épées lumineuses dans lesdites images,
dans lequel lesdits artefacts sous la forme d'épées lumineuses proviennent d'effets de diffusion sur des rayures dans un pare-brise du véhicule à moteur, lesquels effets de diffusion sont perpendiculaires à la courbe de mouvement d'un essuie-glace du véhicule à moteur,
**caractérisé en ce que** ledit dispositif de traitement (14) est adapté à calculer un gradient de disparité k dans une direction verticale pour au moins une partie des images capturées et à déterminer et supprimer lesdits artefacts sous la forme d'épées lumineuses dans lesdites images sur la base dudit gradient de disparité verticale k, dans lequel, pour chacun desdits objets candidats, un gradient de disparité verticale moyen est déterminé sur la base dudit gradient de disparité verticale k,
dans lequel ledit dispositif de traitement (14) comprend un filtre adapté à éliminer par filtrage les objets candidats, qui sont considérés comme des épées lumineuses, dont le gradient de disparité verticale moyen se situe dans une plage de valeurs prédéterminée autour d'une valeur de consigne k_ls ou à ne garder que les objets candidats dont le gradient de disparité verticale moyen se situe autour de zéro,
dans lequel ladite valeur de consigne k_ls correspond au gradient de disparité verticale d'un artefact sous la forme d'épée lumineuse et est déterminée par k_ls = b/y, où b est la ligne de base stéréo de l'appareil d'imagerie (11) et y est la hauteur verticale du pare-brise.

2. Le système de vision selon la revendication 1, **caractérisé en ce que** ledit gradient de disparité verticale est comparé à une valeur seuil k_thr.

3. Le système de vision selon la revendication 2, **caractérisé en ce qu'**une structure dans une image capturée est considérée comme un artefact sous la forme d'épée lumineuse si la valeur absolue du gradient de disparité verticale k de ladite structure est supérieure à ladite valeur seuil k_thr.

4. Le système de vision selon l'une quelconque des revendications précédentes, **caractérisé en ce qu'**une valeur de consigne k_r du gradient de disparité verticale de la route est prise en compte dans ladite détermination ou suppression d'artefact sous la forme d'épée lumineuse en écartant les structures ayant un gradient de disparité verticale k ≥ k_r.

5. Le système de vision selon la revendication 4, **caractérisé en ce que** la valeur de consigne du gradient de disparité verticale k_r de la route est k_r = b/H, où b est la ligne de base stéréo de l'appareil d'imagerie et H est la hauteur de l'appareil d'imagerie au-dessus du sol.

6. Le système de vision selon l'une quelconque des revendications précédentes, **caractérisé en ce qu'**une structure dans une image capturée est considérée comme un artefact sous la forme d'épée lumineuse si la valeur absolue du gradient de disparité verticale k de ladite structure est supérieure à zéro.

7. Un procédé de vision stéréo pour un véhicule à moteur, comprenant les étapes consistant à capturer des images de l'environnement du véhicule à moteur, effectuer un traitement d'image sur les images capturées et commander un dispositif d'assistance au conducteur (18) en fonction du résultat dudit traitement d'image, identifier des objets candidats dans lesdites images et déterminer des artefacts sous la forme d'épées lumineuses dans lesdites images, dans lequel lesdits artefacts sous la forme d'épées lumineuses proviennent d'effets de diffusion sur des rayures dans un pare-brise du véhicule à moteur, lesquels effets de diffusion sont perpendiculaires à la courbe de mouvement d'un essuie-glace du véhicule à moteur, **caractérisé par** les étapes consistant à calculer un gradient de disparité k dans une direction verticale pour au moins une partie des images capturées, et déterminer et supprimer lesdits artefacts sous la forme d'épées lumineuses dans lesdites images sur la base dudit gradient de disparité verticale k, déterminer pour chacun desdits objets candidats un gradient de disparité verticale moyen sur la base dudit gradient de disparité verticale k, et éliminer par filtrage les objets candidats, qui sont considérés comme des épées lumineuses, dont le gradient de disparité verticale moyen se situe dans une plage de valeurs prédéterminée autour d'une valeur de consigne k_ls ou ne garder que les objets candidats dont le gradient de disparité verticale moyen se situe autour de zéro, dans lequel la valeur de consigne k_ls correspond au gradient de disparité verticale d'un artefact sous la forme d'épée lumineuse et est déterminée par k_ls = b/y, où b est la ligne de base stéréo de l'appareil d'imagerie (11) et y est la hauteur verticale du pare-brise.

Fig. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140321701 A1

- US 20150156471 A1

**Non-patent literature cited in the description**

- **A. KELLY et al.** Stereo Vision Enhancement for Low-Cost Outdoor Autonomous Vehicles. *1998 IEEE Conference on Robotics and Automation,* May 1998

- High-quality Real-time Stereo using Adaptive Cost Aggregation and Dynamic Programming. **L. WANG et al.** Proc. of the Third In. Symp. on 3D Data Processing, Visualization, and Transmission. IEEE, 2006
- **S. B. POLARD et al.** PMF: A stereo correspondence algorithm using a disparity gradient limit. *Perception,* 1985, vol. 14, 449-470